# FASCICULE DE BREVET EUROPEEN

(11) **EP 0 654 624 B1**
(45) Date de publication et mention de la délivrance du brevet: **11.09.1996**
(21) Numéro de dépôt: 94117734.7
(22) Date de dépôt: 10.11.1994
(51) Int. Cl.: F16H 63/18, F16H 61/32

(54) **Mécanisme de changement de vitesse pour transmission semi-automatique**
Gangschaltvorrichtung für halbautomatisches Getriebe
Gear shift mechanism for semi automatic transmission

(30) Priorité: 18.11.1993 FR 9313768
(43) Date de publication de la demande: 24.05.1995
(73) Titulaire: SMH Management Services AG, CH-2501 Biel (CH)
(72) Inventeur: Wenger, Urs, CH-4900 Langenthal (CH); Jenni, Hans Rudolf, CH-4900 Langenthal (CH); Wüthrich, Andreas, CH-3145 Niederscherli (CH)
(74) Mandataire: Thérond, Gérard Raymond

(56) Documents cités:
- DE-C- 952 600
- DE-C- 4 205 670
- PATENT ABSTRACTS OF JAPAN vol. 6, no. 260 (M-180) (1138) 18 Décembre 1982 & JP-A-57 154 548 (KAWASAKI JUKOGYO) 24 Septembre 1982
- PATENT ABSTRACTS OF JAPAN vol. 12, no. 437 (M-765) 17 Novembre 1988 & JP-A-63 172 045 (KIKUZAWA HIROMASA) 15 Juillet 1988

## Description

La présente invention est relative à une boîte de vitesses destinée notamment à être montée à la sortie d'un moteur à explosion dont le couple maximal est fourni à un régime relativement élevé (de l'ordre de 3000 t/m, par exemple).

Lorsqu'un moteur à explosion est conçu pour fonctionner avec un couple maximal à un régime relativement élevé, il est souhaitable que la boîte de vitesses qui y est couplée présente un nombre de rapports de transmission également assez élevé. Ceci est le cas par exemple pour les motocycles dont les boîtes de vitesses ont généralement six rapports. Pour rendre la boîte de vitesses aussi légère et simple que possible, il est en outre habituel de la construire sans dispositif de synchronisation.

Par ailleurs, une boîte de vitesses pour motocycle est en général commandée au pied par l'intermédiaire d'un sélecteur à pédale qui ne permet de choisir les rapports de la boîte que dans une suite montante ou descendante sans que le motard puisse librement choisir d'emblée un rapport donné à partir du rapport dans lequel, à un moment donné, est placée la boîte.

Ces particularités des boîtes de vitesses pour motocycle les rendent peu aptes à équiper des voitures automobiles, ce qui est en principe regrettable, car leur légèreté et leur simplicité de construction sont des propriétés qu'il serait souhaitable de pouvoir exploiter également dans les véhicules automobiles, surtout dans ceux qui sont de petite taille et destinés à la ville.

Le but essentiel de la présente invention consiste donc à fournir une boîte de vitesses conçue selon les principes de la boîte de vitesses d'un motocycle, mais adaptée spécialement pour être utilisée sur un véhicule automobile, en particulier sur un véhicule dont le moteur d'entraînement présente son couple maximal à un régime relativement élevé.

L'invention a donc pour objet une boîte de vitesses comportant:
- un arbre primaire destiné à être couplé à une source de puissance;
- un arbre secondaire destiné à être couplé à une sortie de puissance;
- une pluralité de jeux d'engrenages montés sur lesdits arbres primaire et secondaire, lesdits jeux d'engrenages pouvant sélectivement être mis en prise pour établir une pluralité de rapports de transmission entre ladite source et ladite sortie;
- lesdits jeux d'engrenages comportant une pluralité d'engrenages de commutation desdits rapports, ces engrenages étant montés mobiles axialement sur lesdits arbres pour permettre l'établissement desdits rapports;
- des moyens de sélection couplés auxdits engrenages de commutation pour en provoquer les mouvements axiaux appropriés en fonction du rapport de transmission souhaité;
- lesdits moyens de sélection comportant un arbre sélecteur de rapports monté à rotation pour pouvoir présenter au moins autant de positions de sélection qu'il y a de rapports de transmission possibles, ledit arbre sélecteur étant à cet effet pourvu de moyens formant came couplés auxdits engrenages de commutation par l'intermédiaire de moyens formant contre-came;
- ladite boîte de vitesses étant caractérisée en ce qu'elle comporte également
- des moyens de découplage pour rompre sélectivement le couplage entre chaque moyen formant came et chaque moyen formant contre-came qui lui est associé, afin de permettre la libre rotation dudit arbre sélecteur vers une position de sélection de rapport quelconque, quel que soit le rapport de transmission précédemment sélectionné.

Grâce à ces caractéristiques, il devient possible de choisir, sans actionner les engrenages de commutation, de passer d'un rapport de transmission à n'importe quel autre rapport de transmission au lieu de devoir sélectionner les uns après les autres les rapports situées entre le rapport présent et le rapport nouvellement sélectionné.

Ainsi, malgré le nombre relativement élevé de rapports possibles, la boîte de vitesse selon l'invention présente un faible taux d'usure et une grande rapidité de changement des rapports. Elle se prête donc particulièrement bien à l'adaptation sur un moteur dont le couple maximal se situe à un régime relativement élevé et qui nécessite une boîte de vitesses ayant un grand nombre de rapports. Un tel moteur étant d'une construction légère, un ensemble moteur le comportant en combinaison avec une boîte de vitesses selon l'invention, peut équiper avantageusement une voiture de dimensions réduites appropriée en particulier pour la ville.

Selon une autre caractéristique de l'invention, la boîte de vitesses comprend des moyens pour assurer une commande automatique de l'arbre sélecteur et des moyens permettant de découpler les moyens formant came et les moyens formant contre-came associés à cet arbre sélecteur.

Il s'est avéré, en effet, que le fait de pouvoir supprimer la liaison mécanique entre l'arbre sélecteur et les engrenages de commutation, rend la boîte de vitesse selon l'invention particulièrement appropriée pour être automatisée. Cette caractéristique avantageuse rend cette boîte encore plus attractive pour en équiper une petite voiture de ville sans que le prix de revient et la complexité mécanique de cette voiture en soient défavorablement affectés.

Avantageusement, lesdits moyens de découplage comportent un arbre de découplage monté rotatif, parallèlement audit arbre sélecteur, cet arbre de découplage étant équipé d'au moins une came par moyen formant contre-came que compte ledit arbre sélecteur, chacune desdites cames de découplage étant montée de manière à pouvoir dégager ledit moyen formant contre-came de son moyen formant came associé.

Cette caractéristique particulière permet de rendre automatique tout passage de rapport, y compris ceux qui sautent plusieurs rapports intermédiaires, et ce sans compliquer outre mesure la construction de la boîte de vitesses.

Selon une autre caractéristique de l'invention, ledit arbre de découplage est pourvu de moyens de commande de passage en marche arrière, la boîte comprenant en outre un engrenage de marche arrière associé auxdits arbres primaire et secondaire et un engrenage de commutation de marche arrière monté de manière à pouvoir être commandé par lesdits moyens de commande de marche arrière.

L'invention a également pour objet un groupe moteur destiné plus particulièrement à équiper un véhicule automobile et comportant, en combinaison un moteur d'entraînement, une boîte de vitesses telle que définie ci-dessus et couplée à ce moteur, ainsi qu'un dispositif de démarrage équipé d'un moteur de lancement, ce groupe moteur étant caractérisé en ce que ledit moteur de lancement est couplé de manière à pouvoir sélectivement lancer ledit moteur d'entraînement et servir d'organe d'entraînement pour ledit arbre sélecteur et lesdits moyens de découplage.

D'autres caractéristiques et avantages de la présente invention apparaîtront au cours de la description qui va suivre, donnée uniquement à titre d'exemple et faite en se référant aux dessins annexés sur lesquels:
- la figure 1 est une vue schématique du mode de réalisation préféré de la boîte de vitesses suivant l'invention, montrant la disposition générale des organes essentiels de cette boîte;
- la figure 2 est une vue en coupe de la boîte de vitesses selon l'invention, montrant plus en détail ses organes essentiels, la vue étant prise selon la ligne de coupe brisée II-II de la figure 3;
- la figure 3 est une vue partielle de côté de la boîte de vitesses:
- la figure 4 est une vue en coupe , à plus grande échelle que les figures 1 à 3, de l'unité de changement de rapports de la boîte de vitesses suivant l'invention;
- la figure 5 est une vue en coupe, à la même échelle que la figure 4, de l'unité de commande de changement de rapports de la boîte de vitesses;
- la figure 5A est une vue en coupe d'un détail de la construction de la boîte de vitesses;
- la figure 5B est une vue de face à grande échelle d'une contre-came utilisée dans l'unité de commande de changement de rapports;
- la figure 6 est une vue en coupe, à une échelle encore plus grande que celle des figures 4 et 5, du mécanisme de démarrage du moteur à explosion auquel la boîte de vitesses selon l'invention peut être couplée;
- la figure 7 est une vue en coupe, à la même échelle que celle de la figure 6, d'une partie de l'unité de commande de changement de rapports de la boîte de vitesses;
- la figure 8 est une vue extérieure d'un arbre de commande de sélection de rapports;
- la figure 9 est une vue développée dans un plan, montrant les profils des rainures formant came de l'arbre de commande de sélection de rapports représenté sur la figure 8;
- la figure 10 est une vue extérieure d'un arbre de découplage permettant une sélection libre des rapports avant et de la marche arrière;
- la figure 11 est une vue développée dans un plan montrant le profil d'une rainure formant came de l'arbre de découplage de la figure 10, cette rainure étant destinée à assurer la sélection de la marche arrière de la boîte de vitesses;
- la figure 12 montre, développé dans un plan, le profil des trois paires de cames ménagées sur l'arbre de découplage représenté sur la figure 10,
- la figure 13 est une vue en coupe, à la même échelle que celle de la figure 7, d'un organe d'entraînement associé à l'arbre de commande de sélection de rapports représenté sur la figure 8;
- la figure 14 est une vue en bout de l'organe d'entraînement de la figure 13, montrant également une contre-came coopérant avec celui-ci;

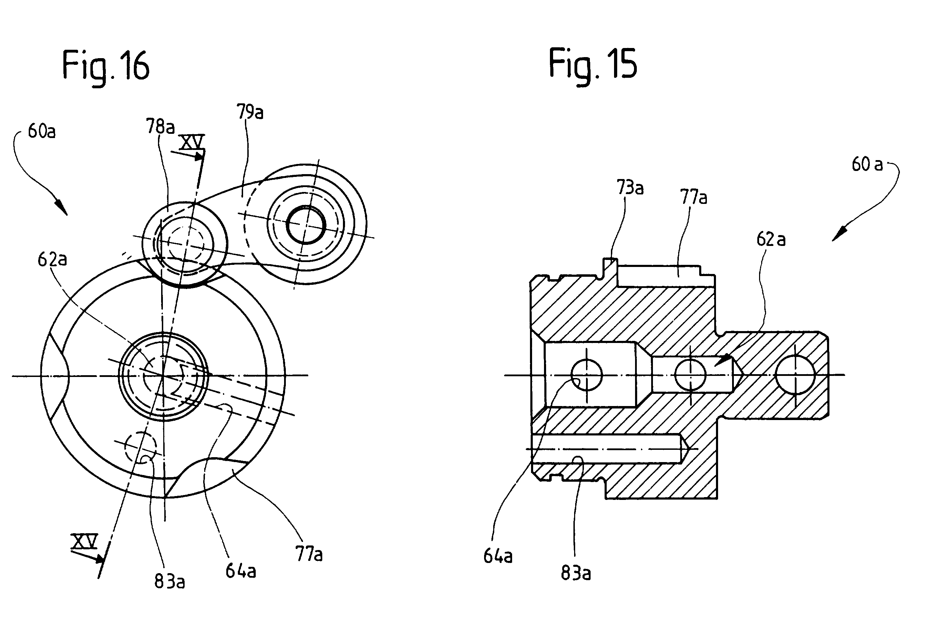

- la figure 15 est une vue en coupe, à la même échelle que celle de la figure 13, d'un organe d'entraînement associé à l'arbre de découplage et de commande de marche arrière représenté sur la figure 10;
- la figure 16 est une vue en bout de l'organe d'entraînement de la figure 15, la vue montrant également la contre-came qui coopère avec celui-ci;
- les figures 17 à 25 illustrent, par des vues en coupe radiale les positions relatives de l'arbre de commande de sélection de rapports et de l'arbre de découplage et de commande de marche arrière, au cours de plusieurs phases essentielles du fonctionnement de la boîte de vitesses selon l'invention; et
- les figures 26, 27 et 28 illustrent le fonctionnement de la boîte de vitesses lors de la sélection de la marche arrière.

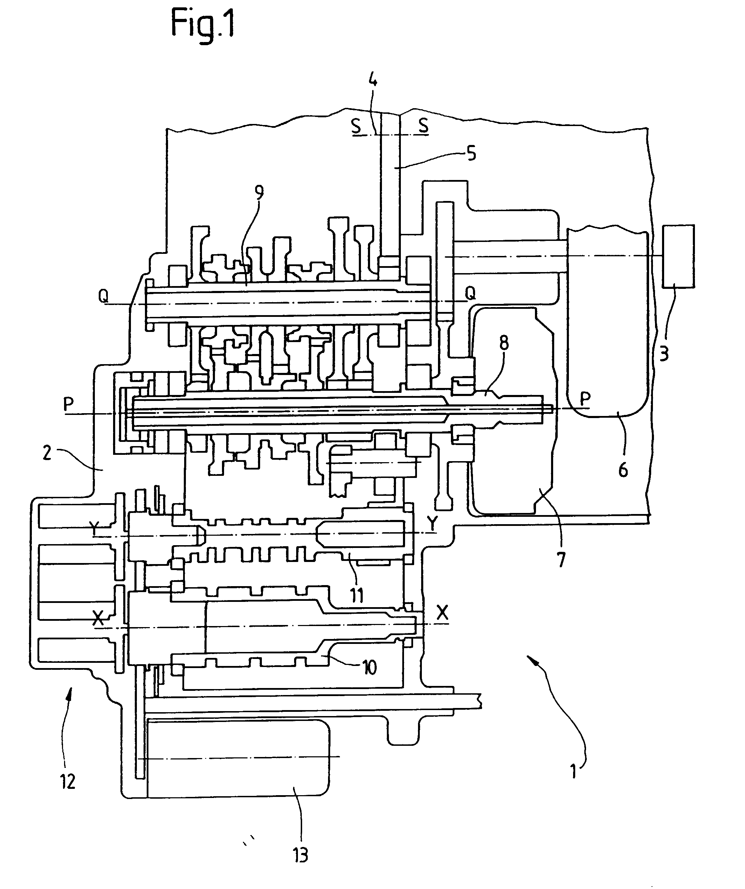

On va tout d'abord se référer à la figure 1 qui représente schématiquement les organes essentiels de la boîte de vitesses suivant l'invention.

La boîte de vitesses automatique selon l'invention est désignée généralement par la référence 1. Elle est logée dans un carter 2 et destinée à assurer, avec un rapport de transmission variable, la transmission d'un mouvement de rotation provenant d'un moteur d'entraînement symbolisé par le rectangle 3 à un arbre de sortie 4 symbolisé par l'axe S-S d'une roue dentée de sortie 5. Le moteur d'entraînement 3 peut être un moteur à combustion interne, par exemple.

La chaîne cinématique interposée entre le moteur d'entraînement 3 et l'arbre de sortie 4 comprend successivement: un convertisseur de couple 6, un embrayage 7, un arbre primaire 8, d'axe P-P, et un arbre secondaire 9, d'axe Q-Q.

La boîte de vitesses 1 comprend également un arbre 10 ou arbre sélecteur, d'axe X-X, pour la commande de la sélection des rapports, un arbre 11 ou arbre de découplage, d'axe Y-Y, pour la commande de la sélection libre des rapports et de la marche arrière, une unité 12 de commande de ces deux arbres 10 et 11 et un moteur de commande 13.

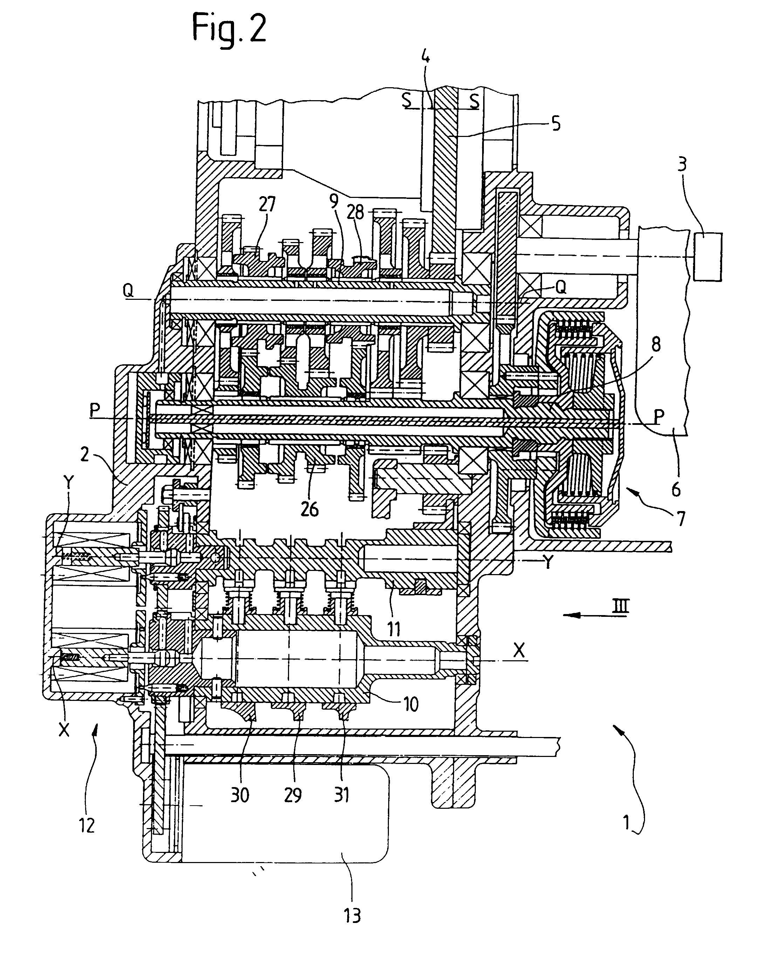

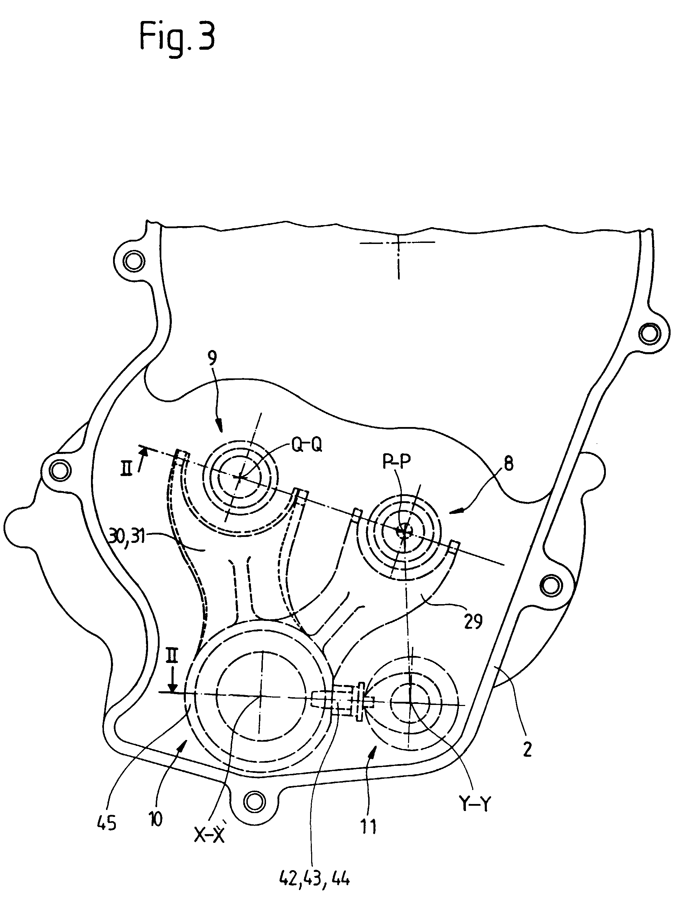

L'examen des figures 2 et 3 montre la disposition dans l'espace des axes des divers organes de la boîte de vitesses, les figures 1 et 2 en montrant une coupe selon la ligne de coupe brisée II-II de la figure 3.

La construction de l'exemple de boîte de vitesses selon l'invention, représenté aux figures, est dérivée de celle des boîtes de vitesses utilisées habituellement pour les motocycles.

Cette construction qui est connue en soi à été reprise dans la boîte de vitesses selon l'invention en ce qui concerne l'unité de changement de rapports proprement dite comprenant notamment l'arbre primaire 8 et l'arbre secondaire 9, ainsi que les roues dentées, pignons et baladeurs qui sont associés à ces arbres. Il en est de même de l'arbre sélecteur 10. Sur un motocycle, cet arbre sélecteur est classiquement actionné au pied par le motard par l'intermédiaire d'un mécanisme à cliquet.

En revanche, la construction de la boîte de vitesses selon l'invention diffère notablement de cette construction classique en ce qu'elle comporte des moyens pour en permettre la commande automatique, en ce que les rapports peuvent être sélectionnés selon une suite quelconque et en ce que l'unité de commande automatique de changementde rapports présente une construction originale.

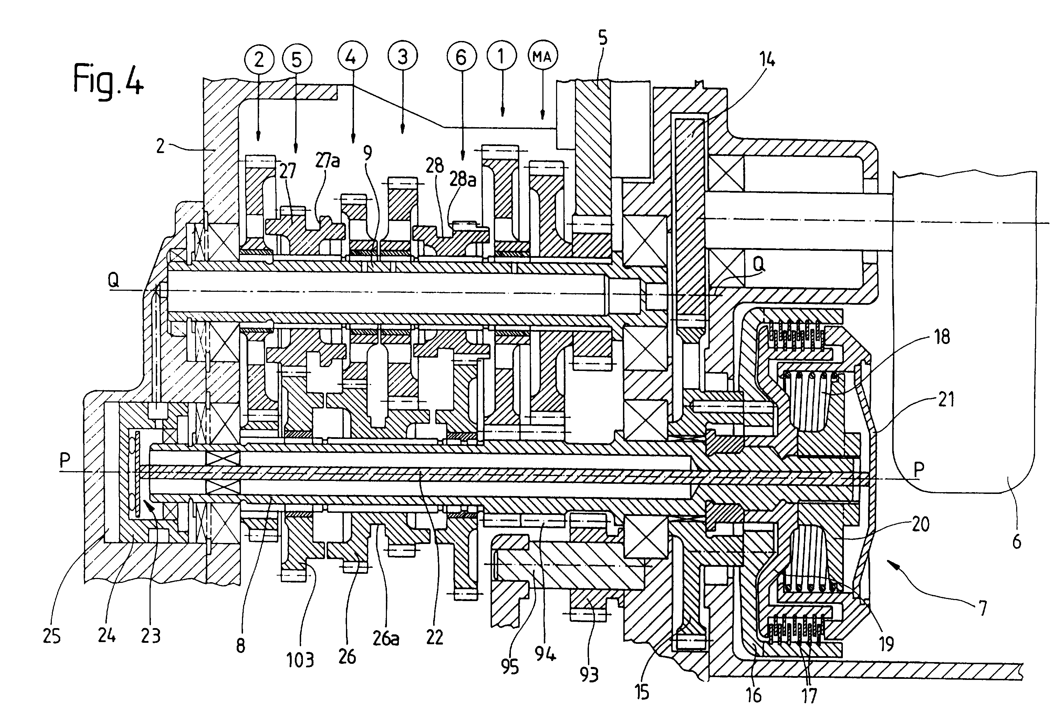

Par conséquent, en se référant maintenant plus particulièrement à la figure 4, on va brièvement décrire la partie classique de la boîte de vitesses assurant les changements de rapports proprement dits, pour ensuite décrire en détail, à l'aide des autres figures les caractéristiques particulières et originales que comporte la boîte de vitesses selon l'invention.

Il est à noter toutefois que la figure 4 fait apparaître le convertisseur de couple 6 et l'embrayage 7 à commande automatique hydraulique, organes que ne comporte classiquement pas une boîte de vitesses pour motocycle.

Le convertisseur de couple 6 est couplé à une paire de roues dentées 14 et 15, la roue dentée 15 étant solidaire en rotation de la cloche 16 de l'embrayage 7.

Dans le cas représenté, cet embrayage est du type à anneaux de friction multiples 17 pouvant être serrés les uns contre les autres par un ressort d'embrayage 18 par l'intermédiaire d'un plateau 19 et d'une bague d'appui 20.

Les anneaux de friction 17 peuvent être desserrés grâce à un disque de débrayage 21 qui est solidaire du plateau 19. Ce disque est en contact avec un poussoir 22 guidé dans l'arbre primaire 8 qu'il traverse de part en part. A son extrémité opposée, le poussoir 22 s'appuie sur une butée à aiguilles 23 formant palier axial et montée dans un piston hydraulique de commande 24. Ce dernier peut coulisser dans une chambre 25 ménagée dans le carter 2 de la boîte 1.

Ainsi, on voit que l'arbre primaire 8 peut être découplé du convertisseur de couple 6, en mettant la chambre 25 sous pression, l'accouplement étant, au contraire réalisé en relâchant la pression dans cette chambre, le ressort 18 assurant alors l'embrayage.

Dans l'exemple décrit, la boîte 1 présente six rapports de vitesses qui sont obtenus par l'actionnement sélectif d'un baladeur 26 monté sur l'arbre primaire 8 et de deux baladeurs 27 et 28 montés sur l'arbre secondaire 9. Ces baladeurs peuvent, de façon classique, coulisser sur leur arbre porteur respectif tout en étant solidaires en rotation avec celui-ci, grâce à des cannelures appropriées. Ils coopèrent avec des pignons à engrenage droit (non référencés) assurant par leur mise en prise adéquate les rapports de vitesses indiqués par les chiffres 1 à 6 dans des petits cercles au-dessus de l'arbre secondaire 9 sur la figure 4. Un jeu de pignons est également prévu pour la marche arrière, indiquée par MA, l'exemple de réalisation décrit ici étant particulièrement approprié pour être utilisé sur un véhicule automobile. Bien entendu, l'adjonction d'une marche arrière est également une caractéristique propre à la présente invention, par rapport aux boîtes de vitesses connues pour les motocycles.

Comme on le voit plus particulièrement sur les figures 2, 3 et 5, les baladeurs 26, 27 et 28 coopèrent avec des fourchettes 29, 30 et 31 qui sont montées à rotation sur l'arbre 10 de commande de sélection de rapports. Les fourchettes 29, 30 et 31 sont également montées mobiles en translation sur cet arbre 10 entre deux positions d'engagement de rapport situées de part et d'autre d'une position neutre. Ces fourchettes 29, 30 et 31 sont en prise avec les baladeurs respectifs par l'intermédiaire de rainures annulaires 26a, 27a et 28a respectives usinées dans ces baladeurs (figure 4).

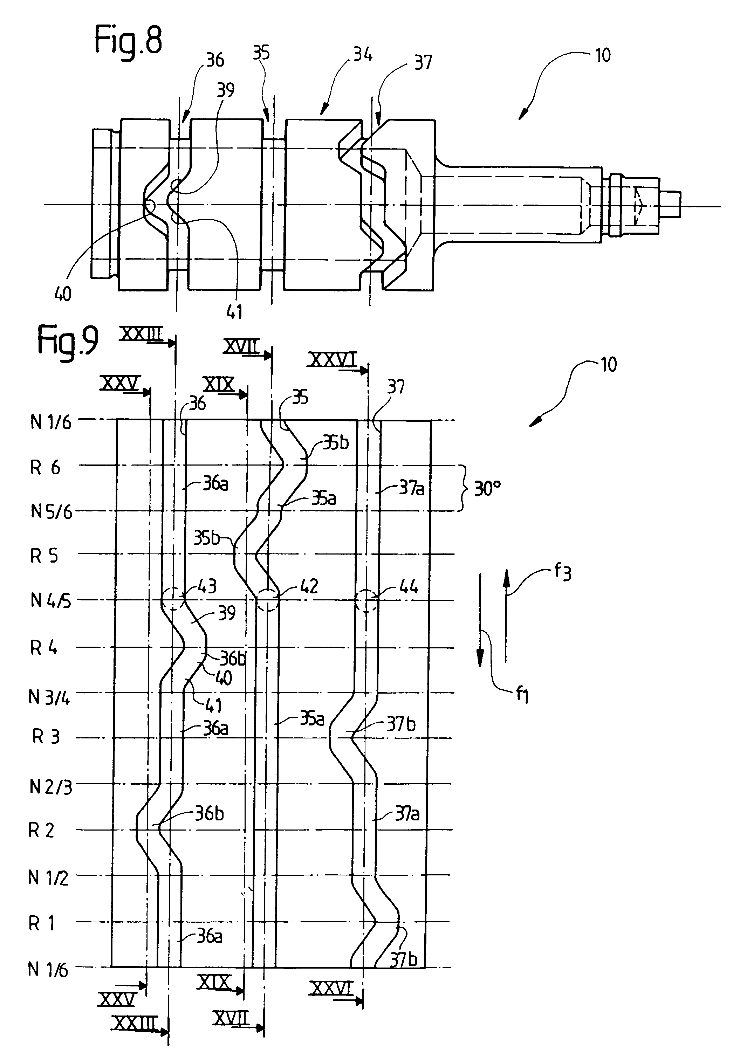

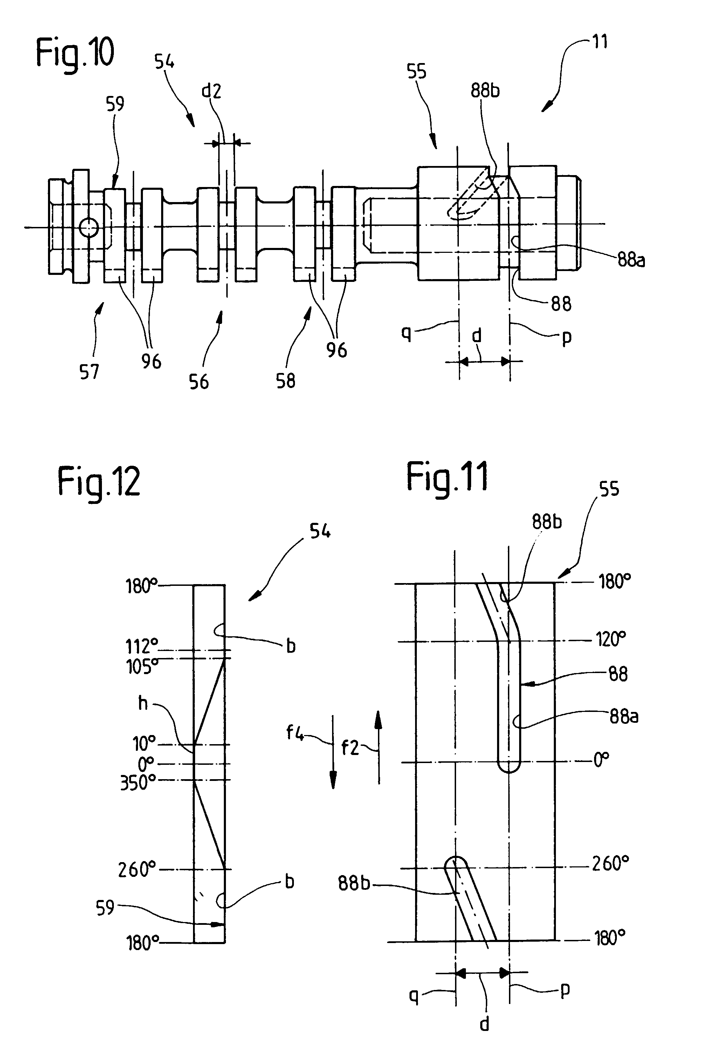

Les figures 8 et 9 représentent plus particulièrement l'arbre 10 de commande de sélection des rapports.

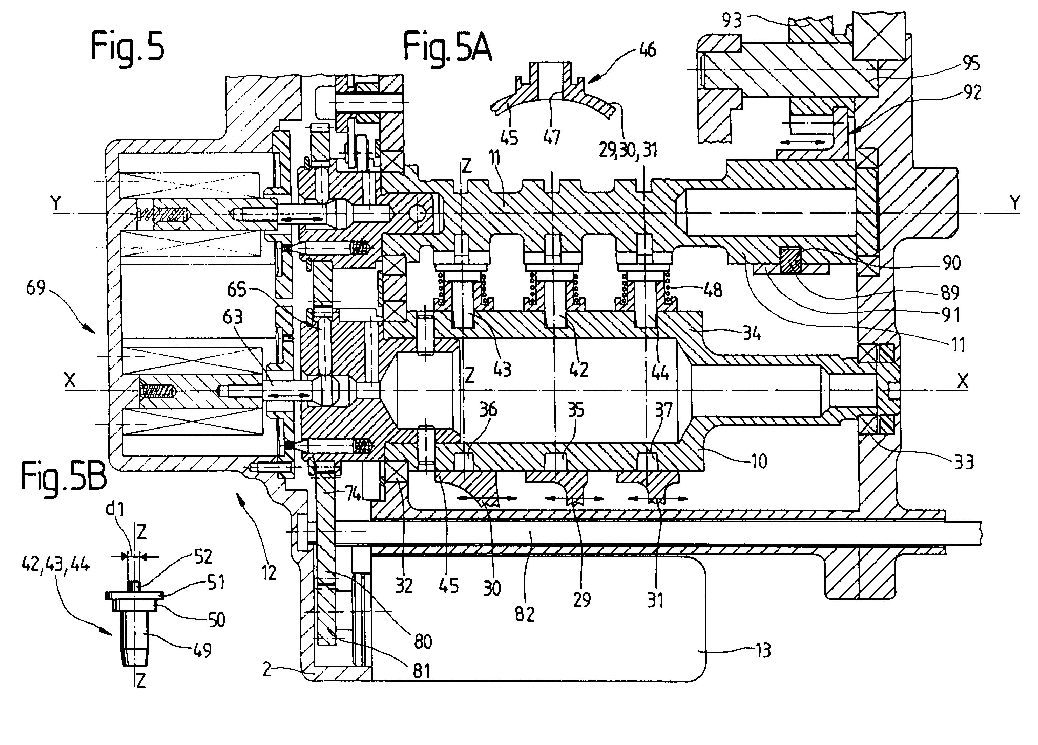

Cet arbre présente la forme d'un cylindre creux suspendu à rotation dans le carter 2 au moyen de paliers 32 et 33 (figure 5). Dans une partie cylindrique 34 de plus grand diamètre de cet arbre, sont usinées trois rainures 35, 36 et 37 formant came et dont les profils apparaissent clairement sur la figure 9. Celle-ci montre également que l'arbre 10 a douze positions indiquées respectivement par des traits mixtes et écartées les unes des autres de 30° angulaires. Ces positions correspondent alternativement à une position neutre N dans laquelle aucun rapport n'est sélectionné et à l'un des six rapports de transmission 1 à 6.

La rainure 35 placée entre les rainures 36 et 37 est destinée à provoquer le déplacement axial dans un sens ou dans l'autre du baladeur 26 permettant d'engager le rapport de 5ème ou de 6ème. De même, la rainure 36 permet de déplacer axialement le baladeur 27 pour engager les rapports de 2ème et de 4ème. La rainure 37 à son tour est destinée à l'engagement des rapports de 1ère et de 3ème.

Le profil de chaque rainure 35, 36 et 37 comporte, considéré dans le sens circonférentiel, une ou plusieurs tronçons neutres, respectivement 35a, 36a et 37a ainsi que deux tronçons de commande, respectivement 35b, 36b et 37b.

Chaque tronçon de commande est composé d'une section oblique 39, d'un palier "haut" 40 et d'une autre section oblique 41. Les paliers hauts 40 correspondent à l'engagement d'un rapport par l'intermédiaire du baladeur respectif; les tronçons neutres 35a maintiennent le baladeur correspondant dans sa position inactive.

Chaque rainure formant came 35, 36 et 37 de l'arbre 10 coopère avec une contre-came respective 42, 43 et 44 qui est engagée radialement dans l'oeil 45 des fourchettes correspondantes 29, 30 et 31. L'anneau qui forme l'oeil de chaque fourchette comprend une protubérance latérale 46 (figure 5A) percée d'une ouverture 47 ajustée au diamètre de la contre-came 42, 43 ou 44 qui est destinée à y être engagée. La base de chaque protubérance 46 revêt la forme d'une cuvette annulaire destinée à assurer l'appui à un ressort de rappel 48. Ce ressort sollicite la contre-came correspondante radialement vers l'extérieur par rapport à l'anneau 45 qui forme l'oeil de la fourchette.

En effet, selon une caractéristique essentielle de l'invention, les contre-cames 42, 43 et 44 sont montées mobiles radialement selon des axes Z-Z par rapport à l'arbre 10 de manière que la coopération entre chaque contre-came et sa rainure formant came puisse momentanément être suspendue.

Chaque contre-came 42, 43 et 44 comprend (figure 5B) une partie 49 de guidage axial selon l'axe Z-Z, partie dont l'extrémité libre est engagée dans la rainure de l'arbre 10, une partie 50 de montage du ressort 48, un épaulement radial 51, et un ergot de guidage 52 dont la fonction apparaître par la suite.

Comme on peut le voir sur la figure 10, l'arbre 11 qui est suspendu dans des paliers 53 et 54 comme représenté sur la figure 5, présente une partie d'excentrique 54 et une partie 55 de commande de marche arrière décrite par la suite.

La partie d'excentrique 54 comprend trois paires 56, 57 et 58 de cames qui coopèrent avec les contre-cames 42, 43 et 44. L'épaulement radial 51 de chaque contre-came est maintenu élastiquement contre la surface périphérique 59 de chaque came par le ressort 48 associé. Il en résulte que les contre-cames 42, 43 et 44 peuvent quitter simultanément leur rainure prévue dans l'arbre 10 par rotation de l'arbre 11 sur un certain angle.

Bien que la boîte de vitesse selon l'invention puisse recevoir des éléments de commande manuels tels qu'à l'instar de ce qui existe classiquement sur les motocycles, des mécanismes à cliquet et des manivelles, pour commander les arbres 10 et 11, l'invention propose de rendre cette commande entièrement automatique en dotant ces deux arbres de commandes électromagnétiques. L'homme de métier saura concevoir l'électronique nécessaire pour fournir à ces commandes électromagnétiques les signaux convenables pour un fonctionnement irréprochable de la boîte, électronique qui recevra des paramètres de commande relatif à la marche du véhicule, par exemple.

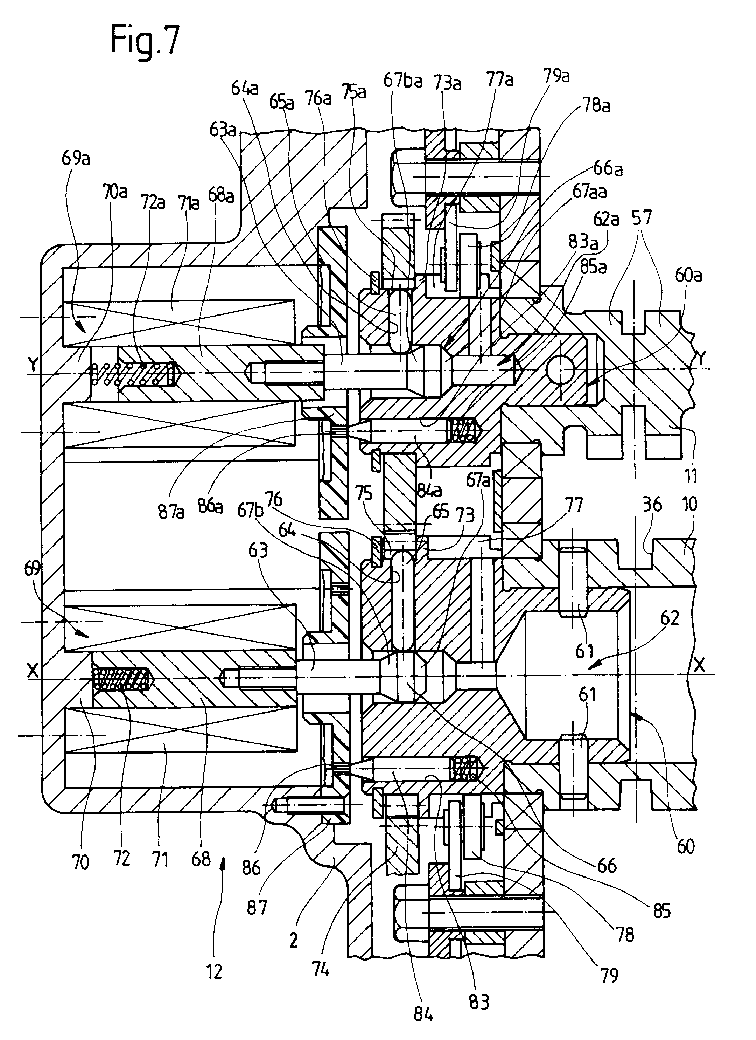

L'arbre 10 est solidaire en rotation d'un organe d'entraînement 60 (figures 7, 13 et 14) par l'intermédiaire de deux clavettes 61. Cet organe d'entraînement présente une forme générale cylindrique centrée sur l'axe X-X. Concentriquement à cet axe, l'organe d'entraînement 60 présente un passage 62 dont la partie située à l'extrémité opposée à l'arbre 10 forme guide pour un poussoir d'accouplement 63. Un trou radial 64 débouche dans le passage 62 et sert de guidage à une clavette 65 mobile radialement dont la longueur est légèrement supérieure à celle du trou 64. La clavette présente des extrémités hémisphériques. Elle peut être amenée dans une position dans laquelle elle dépasse de l'embouchure externe du trou 64.

Le poussoir d'accouplement 63 se présente sous la forme d'une tige comprenant une tête élargie 66 située entre deux parties tronconiques 67a et 67b d'angles au sommet opposés. Le diamètre de la tête élargie 66 est ajustée à celui du passage 62. L'extrémité opposée du poussoir d'accouplement 63 est vissée dans le noyau 68 d'un électro-aimant 69 dont l'armature 70 garnie de sa bobine 71 est fixée sur le carter 2. Un ressort 72 est monté à l'intérieur du noyau 68 en s'appuyant sur l'armature 70; il sollicite le noyau 68 à sortir de l'armature 70 en entraînant le poussoir d'accouplement 63. L'excitation de la bobine de l'électro-aimant 69 provoque la rentrée du noyau 68 dans l'armature 70 et le déplacement concomitant du poussoir 63. Dans ces conditions, grâce à la partie tronconique 67b de sa tête 66, le poussoir 63 déplace radialement la clavette mobile 65 de manière qu'elle fasse saillie du trou radial 64.

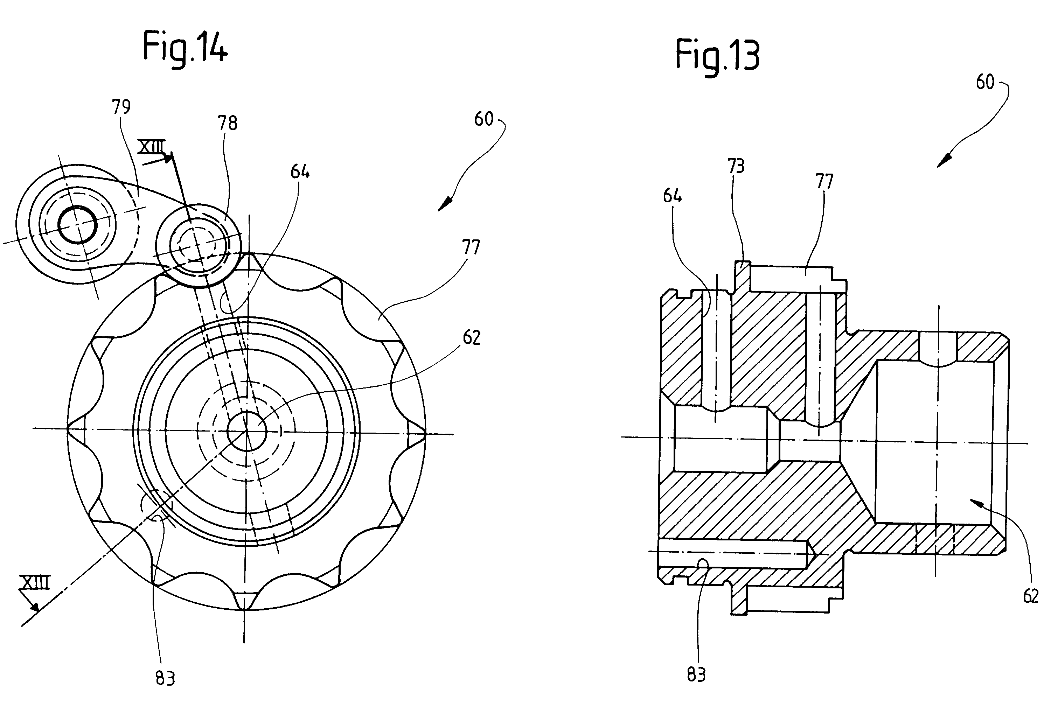

Du côté opposé à l'arbre 10, l'organe d'accouplement 63 présente une bride radiale 73 (figure 13), contre laquelle est appuyée latéralement une couronne dentée 74 (figure 7) bloquée axialement sur l'organe d'entraînement 60. La couronne 74 est montée folle sur celui-ci, tout en pouvant en être rendue solidaire en rotation par l'excitation de l'électro-aimant 69. En effet, elle comporte à sa périphérie interne au moins une encoche 75 (visible en particulier sur la figure 7) dans la ou lesquelles peut pénétrer la clavette 65 sélectivement par le déplacement axial du poussoir 63. Le blocage axial de la couronne dentée 74 est assuré par un circlips 76.

L'organe d'entraînement 60 est également équipé d'une denture 77 à profil arrondi destinée à assurer le positionnement angulaire de l'organe et, partant, de l'arbre 10. Comme décrit précédemment à propos de la figure 9, l'arbre 10 a douze positions de sorte que la denture 77 présente douze dents. Un galet de positionnement 78 monté fou au bout d'un levier 79 articulé sur le carter 2 et sollicité par un ressort (non représenté) est en appui permanent contre la denture 77.

La couronne dentée 74 engrène avec un engrenage réducteur (figure 5) composé de deux roues dentées 80 et 81 dont l'une 80 est montée fixe sur une tige de transmission 82 et dont l'autre 81 est calée sur l'arbre de sortie du moteur électrique d'entraînement et de commande 13. Par conséquent, lorsque ce dernier est alimenté, un mouvement de rotation est transmis par les roues dentées 80 et 81 à la couronne 74 qui, à son tour peut entraîner l'organe d'entraînement 60 et l'arbre 10, à condition que l'électro-aimant 69 soit excité (ce qui est supposé être le cas sur les figures).

L'organe d'entraînement 60 est également pourvu d'un orifice borgne 83 (figure 7) dirigé axialement et débouchant du côté de l'électro-aimant 69. Dans cet orifice est insérée une goupille de contact 84 sollicité vers l'extérieur par un ressort 85 placé entre elle et le fond de l'orifice 83. Ainsi, la goupille 84 est en contact électrique permanent avec une bande annulaire de contacts électriques 86 (au nombre de douze) fixés dans une plaque isolante 87 rapportée sur le carter 2. Les contacts électriques 86 sont insérés, de façon connue en soi, dans un circuit électrique commandant l'alimentation du moteur électrique 13 pour permettre le positionnement de l'arbre 10 dans toute position possible, choisie en fonction de la sélection du rapport de transmission nécessaire. Cette position peut donc être l'une des positions neutres ou l'une des positions correspondant à un tel rapport (voir aussi figure 9).

L'arbre 11 est associé à un ensemble d'entraînement qui est très semblable à celui de l'arbre 10. Dans ce qui va suivre, on ne va donc mettre en évidence que les différences entre les deux ensembles d'entraînement. Les éléments semblables ont été désignés sur les figures (et en particulier la figure 7) par les mêmes références, ceux associés à l'arbre 10 n'ayant pas de suffixe et ceux associés à l'arbre 11 étant pourvus du suffixe "a".

Les différences sont les suivantes:
- le passage 62a ne traverse pas l'organe 60a, mais est borgne.
- la denture 77a qui permet le positionnement stable de l'organe d'entraînement 60a ne comporte que trois dents, car l'arbre 11 ne peut occuper que trois positions qui sont écartées angulairement d'une position dite "0" qui est celle dans laquelle il autorise l'arbre 10 à commander les changements de rapports de vitesses, Ces trois positions sont indiquées sur les figures 11 et 12.
- la roue dentée 74a peut recevoir son énergie de rotation seulement par l'intermédiaire de la roue dentée 74 avec laquelle elle engrène en permanence.
- la plaque isolante 87a ne comporte que trois contacts électriques 86a du fait que l'arbre 11 n'a que trois positions stables.

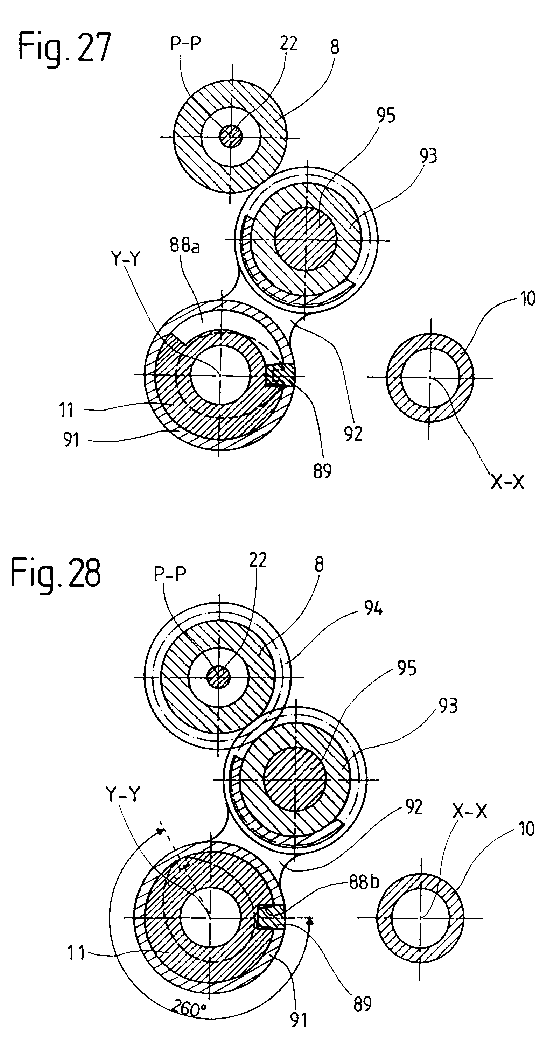

On va maintenant décrire la partie 55 de l'arbre 11 en se référant plus particulièrement aux figures 4, 5 et 10. La partie 55 est de forme générale cylindrique et présente une rainure 88 formant came dont le profil décrit plus loin, est représenté sur la figure 11. La rainure 88 coopère avec une contre-came 89 (figure 5) en forme de bouton et engagée dans un trou radial 90 de l'oeil 91 d'une fourchette 92 de marche arrière (voir aussi les figures 27 et 28).

Les branches de celle-ci sont engagées sur un baladeur 93 de marche arrière qui peut être mis en prise avec une denture 94 de l'arbre primaire 8 et avec la roue de marche arrière calée sur l'arbre secondaire 9. Le baladeur 93 peut coulisser axialement sur une broche 95 fixée dans le carter 2.

Le profil de la rainure formant came 88 apparaît sur la figure 11. Celle-ci est dessinée à côté de la figure 12 de telle manière que l'on puisse étudier l'évolution angulaire de ce profil par rapport à celle du profil des cames 56, 57 et 58 qui a été illustrée sur cette figure 12.

La position angulaire la plus courante est celle qui est désignée, pour le besoin de la description, par 0° sur les figures 11 et 12. Les cames 56, 57 et 58 présentent alors la partie haute h (figure 12) aux contre-cames 42, 43 et 44 de sorte qu'ils les repoussent dans les rainures correspondantes 35, 36 et 37 de l'arbre 10. La rainure 88 débute à cette position angulaire de 0° dans un plan radial p de l'arbre 11.

Elle reste dans ce plan selon le tronçon 88a jusqu'à la position de 120° pour dévier en direction d'un plan radial q distant du plan radial p d'une distance d qui correspond à la course latérale du baladeur 93 et de la fourchette 91.

La position à 120° correspond à l'une des positions particulières de l'arbre 11, à savoir celle dans laquelle l'arbre 10 est libéré par le retrait des contre-cames 42, 43 et 44. Dans cette position, les cames 56, 57 et 58 présentent la partie basse b (figure 12) de leur profil à ces contre-cames.

Au delà de la position de 120°, le tronçon rectiligne 88a se transforme en un tronçon de transfert oblique 88b, jusqu'à atteindre le plan q, où la rainure se termine à la position angulaire 260°. Celle-ci correspond à la troisième position de l'arbre 11 assurant l'engagement du rapport de marche arrière. Dans cette position, les cames 56, 57 et 58 présentent également la partie basse b de leur profil aux contre-cames 42, 43 et 44 qui libèrent donc dans ce cas également l'arbre 10.

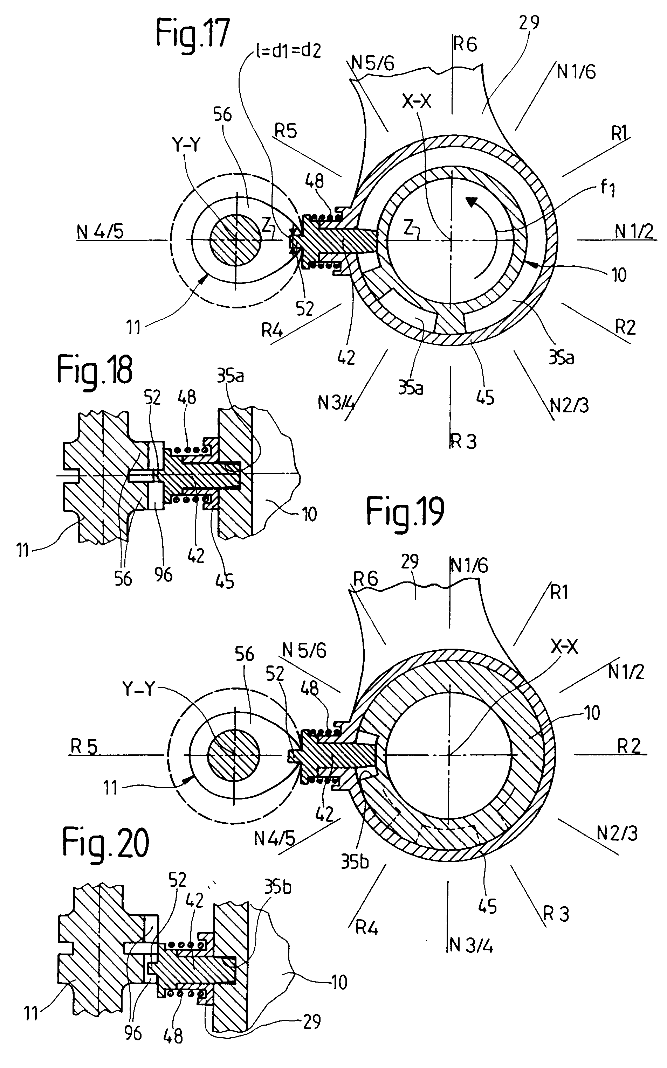

Les figures 10 et 17 à 25 montrent que chaque came des paires de cames 56, 57 et 58 présente une forme ovoïde dont la pointe présente une encoche 96. La largeur l (figure 17) de cette encoche correspond au diamètre d1 de l'ergot 52 (figure 5B) de chaque contre-came 42, 43 et 44. Par ailleurs, la distance axiale d2 (figure 10) entre les cames d'une même paire de l'arbre 11, est également égale à ce diamètre.

Par conséquent, lorsque l'arbre 11 présente une position angulaire dans laquelle les pointes des cames 56, 57 et 58 sont respectivement en face des contre-cames 42, 43 et 44, celles-ci peuvent se déplacer latéralement pour autant qu'elles y soient contraintes par les parties hautes 41 du profil des rainures 35, 36 et 37 de l'arbre 10. Ce déplacement latéral provoque le déplacement de la fourchette 29, 30 ou 31 correspondante et également celui du baladeur 26, 27 ou 28 correspondant, ce qui permet d'engager sélectivement le rapport de vitesses nécessaire.

Pendant la rotation de l'arbre 11, l'épaulement 51 de chaque contre-came est maintenu en appui contre la surface des deux cames correspondantes, pendant que l'ergot 52 circule dans l'espace ménagé entre ces cames (distance d2). Ainsi, les contre-cames sont toujours convenablement guidées, quels que soient les mouvements des deux arbres.

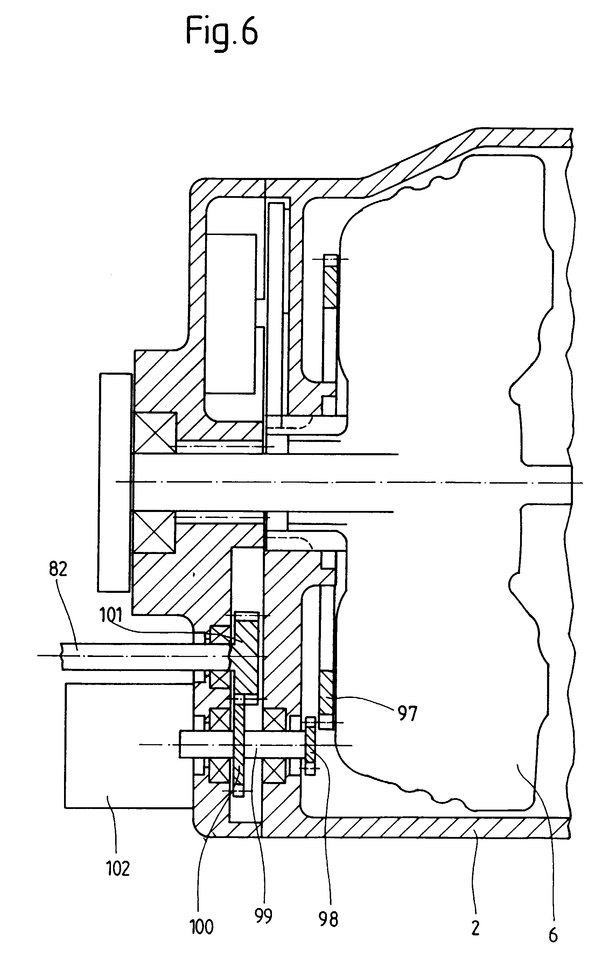

En se référant aux figures 5 et 6, on va maintenant décrire le mécanisme de démarrage du moteur d'entraînement symbolisé par le rectangle 3 sur les figures 1 et 2. De façon classique, le convertisseur 6 présente une couronne dentée de lancement 97 capable d'engrener avec un pignon de lancement 98 monté sur une broche 99 tourillonnant dans la carter 2. Cette broche 99 porte une roue dentée 100 engrenant avec un pignon 101 qui est montée fixe sur la tige de transmission 82.

La broche 99 est montée à coulissement axial dans ses paliers et peut occuper une position non-active (représentée sur la figure 6) et une position active de lancement qui peut être obtenue par l'excitation d'un électro-aimant 102. Dans cette position, le pignon 98 engrène avec la couronne 97.

On constate donc que, selon une caractéristique avantageuse de l'invention, le moteur 13 non seulement assure la commande des arbres 10 et 11, mais il sert également de moteur de démarreur pour le moteur à explosion qui sera couplé à la boîte de vitesses selon l'invention.

En se référant maintenant aux figures 17 à 27 on va décrire quelques exemples des phases de fonctionnement de la boîte de vitesses selon l'invention, en observant surtout, pour chaque cas, la position relative des arbres 10 et 11.

### 1.Passage vers le 5ème rapport neutre.

On suppose que la boîte vient de sortir du 4ème rapport et qu'elle doit passer vers le 5ème. En sortant de 4ème, la boîte est arrivée sur la position neutre entre 4ème et 5ème (neutre 4/5), qui est celle représentée sur les figures 17 et 18.

Il est à noter que chaque passage de rapport nécessite l'actionnement de l'embrayage 7 afin de découpler la boîte de la source de puissance qui est le moteur 3, ce qui est bien connu et ne nécessite donc aucune description particulière.

Le 5ème rapport est engagé, lorsque le baladeur 26 est déplacé pour venir en prise avec la roue 103 (figure 4) montée folle sur l'arbre primaire 8 et engrenant avec le baladeur 27 calé sur l'arbre secondaire 9 (déplacement vers la gauche du baladeur 26 comme vu sur la figure 4). Pour cela, la fourchette 29 doit être déplacée dans le même sens, opération qui est réalisée par le déplacement, toujours dans le même sens de la contre-came 42 qui suit le profil de la rainure 35. Sur la figure 9, on a représenté les contre-cames 42, 43 et 44, lorsqu'elles sont dans la position neutre entre 4ème et 5ème. Il convient donc qu'elles passent dans la position de 5ème, ce qui correspond à une rotation sur 30° de l'arbre 10.

Sur la figure 9, on voit que lors de cette rotation, la position axiale des contre-cames 43 et 44 ne change pas, alors que la contre-came 42 est contrainte de suivre la déviation de la rainure 35.

En d'autres termes, pour obtenir le passage vers le rapport de 5ème, le moteur 13 doit tourner un bref moment pendant lequel l'électro-aimant 69 est excité, de manière que l'arbre puisse effectuer la rotation sur 30° nécessaire. Le résultat de ces opérations successives apparaît sur les figures 19 et 20. Il est à noter que l'arbre 11 est resté immobile pendant ce passage de rapport, l'ergot 52 de la contre-came 42 ayant eu la possibilité de s'engager dans la rainure 96 de la came de gauche de la paire de cames 57 (comme vu sur la figure 10). Ceci est visible clairement sur la figure 20.

L'arbre 11 restant immobile, le passage des rapports ne peut être que progressif c'est-à-dire en montant ou en descendant les rapports, il faut passer par tous les rapports intermédiaires.

La rotation de l'arbre 11 à partir de la position représentée aux figures 17 et 19, permet de supprimer le couplage mécanique qui existe entre lui et les fourchettes. En d'autres termes, l'arbre 10 peut alors être tourné librement et placé dans une position angulaire quelconque ce qui signifie que tout rapport de vitesses peut être choisi librement en fonction des besoin et ce quel que soit le rapport de vitesses précédemment engagé.

### 2. Passage de 5ème en 2ème

En revenant sur les exemples de fonctionnement des figures 17 à 25, on suppose qu'après avoir fonctionné pendant un certain temps sur le rapport de 5ème, on souhaite rétrograder sur le rapport de 2ème.

Il est clair que sans la présence de l'arbre 11 et les organes qui lui sont associés, on devrait alors descendre en passant par tous les rapports du 5ème au 2ème, c'est-à-dire déplacer les fourchettes, les baladeurs etc, afin de leur faire effectuer des mouvements parfaitement inutiles pour le changement de rapport que l'on veut opérer.

Grâce à l'invention, on peut passer directement du 5ème au 2ème rapport (ou effectuer tout autre passage quelconque), en replaçant l'arbre 10 dans une position neutre, (avantageusement la position de la figure 17 qui est le neutre de 4/5), puis en libérant l'arbre 10 par la rotation de l'arbre 11

La première opération ramène la contre-came 42 devant la rainure entre les deux cames 56, ce qui autorise ensuite la rotation de l'arbre 11, grâce au fait que l'ergot 52 peut alors s'insérer entre ces cames.

La seconde opération fait tourner l'arbre 11 de 120°. Comme les trois contre-cames 42, 43 et 44 suivent le profil de leurs doubles cames 56, 57 et 58 associées, elles se déplacent radialement vers l'extérieur sous l'action des ressorts respectifs 48. Du même coup, elles quittent les rainures respectives de l'arbre 10, ce qui permet désormais à celui-ci de tourner librement.

On comprend que la rotation des deux arbres 10 et 11 est, à chaque fois, assurée par le moteur 13, ses engrenages associés, les contacts 86 et les électroaimants 69 et 69a qui sont excités sélectivement et pendant le temps qu'il faut pour opérer les rotations correctes des deux arbres.

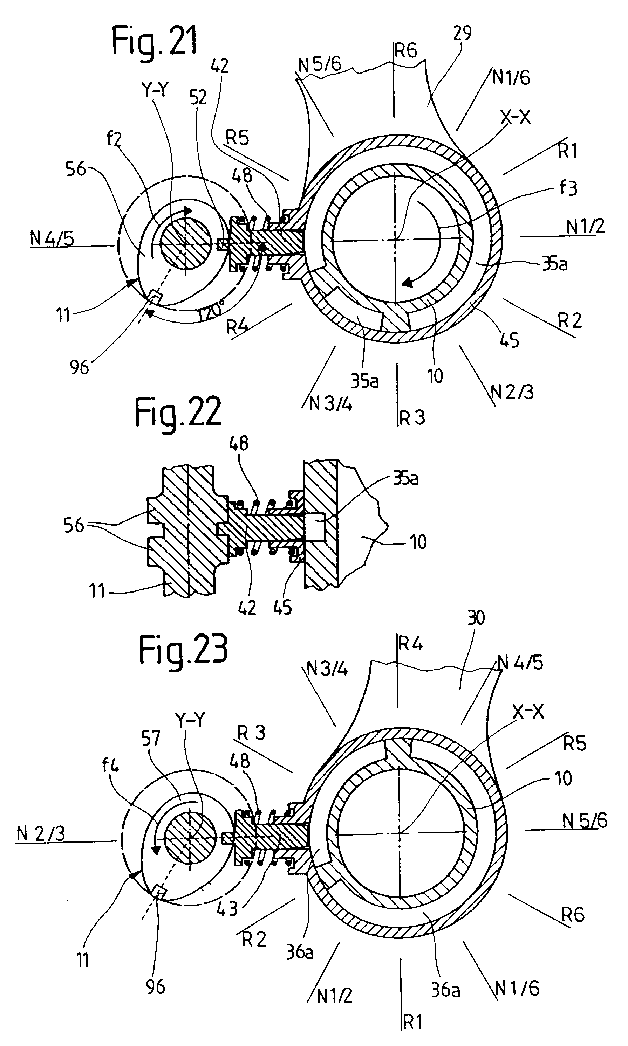

L'arbre 10 est alors amené dans la position de neutre 2/3 comme représenté sur la figure 23 en le faisant tourner dans le sens de la flèche f3 indiquée sur les figures 9 et 21.

La figure 23 représente une vue en coupe au niveau de l'axe Z-Z de la contre-came 43 et on y voit donc la rainure 36 de l'arbre 10, la fourchette 30, la contre-came 43 et les cames 57 de l'arbre 11.

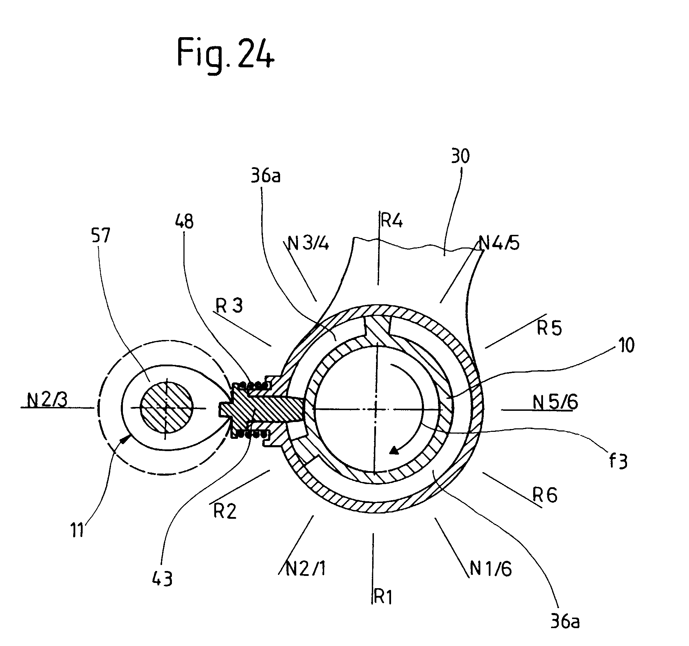

Puis, l'arbre 11 est ramené dans la position de 0° en le faisant tourner dans le sens de la flèche f4 (figures 11 et 23), position qui est représentée à la figure 24 et dans laquelle les encoches 96 se trouvent de nouveau en face des ergots 52 des contre-cames 42, 43 et 44.

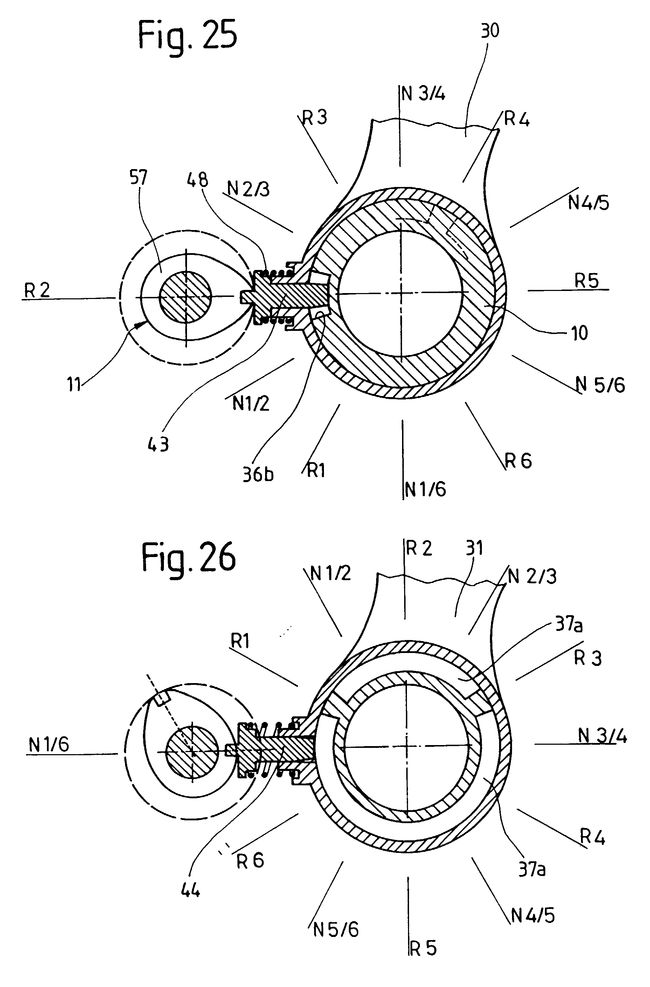

Ensuite, l'arbre 10 est tourné de 30° supplémentaires dans le sens de la flèche f3 pour décaler ainsi la contre-came 43 vers la gauche, ce qui déplace dans le même sens la fourchette 30 et le baladeur 27. Le rapport de 2ème est alors engagé. Les deux arbres sont alors dans la position relative de la figure 25.

### 3. Passage en marche arrière

Les figures 26, 27 et 28 illustrent l'engagement du rapport de marche arrière. Lorsque la marche arrière est sélectionnée, la boîte 1 se place d'abord dans la position de neutre 1/6 selon une procédure analogue à celui qui vient d'être décrite. Puis, l'arbre 11 est entraîné en rotation dans le sens de la flèche f4 de la figure 11, sur un angle de rotation de 260°.

Ces opérations se traduisent par la position relative des arbres 10 et 11 telle qu'illustrée sur la figure 26. Il est à noter que cette figure est une vue en coupe selon l'axe Z-Z de la contre-came 44.

La figure 27 pour sa part, montre la position des organes associés à l'enclenchement de la marche arrière avant que cet enclenchement se produit et la figure 28 les montre dans leurs positions de marche arrière, cette figure correspondant donc à la situation telle que représentée sur la figure 26.

Lorsque la marche arrière n'est pas engagée, c'est-àdire tant que la contre-came 89 circule dans le tronçon 88a de la rainure 88 de l'arbre 11 ou est immobile aux extrémités de ce tronçon, la fourchette de marche arrière 92 et le pignon 93 conservent la position axiale représentée sur les figures 2 et 5. Ceci s'applique naturellement pour la position neutre 1/6 de la boîte, cas auquel l'arbre 11 se trouve dans la position représentée sur la figure 27 dans laquelle les pointes des cames 56, 57 et 58 sont en face des contre-cames 42, 43 et 44.

On voit donc que, pour passer en marche arrière, il convient de commander l'arbre 11 de manière qu'il tourne sur 260° pour que la contre-came 89 arrive au bout de la rainure 88. Il est à noter que dans ces conditions, les contre-cames 42, 43 et 44 se sont dégagées de l'arbre 10 de sorte qu'aucun rapport de marche avant ne peut alors être sélectionne.

La contre-came 89 étant contrainte de se déplacer vers sa position correspondant au plan q (figure 11), c'est à dire vers la gauche comme vu sur les figures, la fourchette 92 se déplace dans le même sens en amenant avec lui le pignon de marche arrière qui vient ainsi s'interposer entre la denture 95 de l'arbre 9 et le pignon de marche arrière de l'arbre 8.

Pour retourner vers la marche avant, les opérations inverses sont exécutées afin de ramener la boîte dans la position de neutre 1/6.

## Revendications

1. Boîte de vitesses comportant:
- un arbre primaire (8) destiné à être couplé à une source de puissance (3, 6);
- un arbre secondaire (9) destiné à être couplé à une sortie de puissance (4, 5);
- une pluralité de jeux d'engrenages montés sur lesdits arbres primaire (8) et secondaire (9), lesdits jeux d'engrenages pouvant sélectivement être mis en prise pour établir une pluralité de rapports de transmission entre ladite source (3, 6) et ladite sortie (4, 5);
- lesdits jeux d'engrenages comportant une pluralité d'engrenages de commutation (26, 27, 28) desdits rapports, ces engrenages étant montés mobiles axialement sur lesdits arbres (8, 9) pour permettre l'établissement desdits rapports;
- des moyens de sélection (10 à 13; 29, 30, 31; 35, 36, 37; 42, 43, 44) couplés auxdits engrenages de commutation (26, 27, 28) pour en provoquer les mouvements axiaux appropriés en fonction du rapport de transmission souhaité;
- lesdits moyens de sélection (10, 12, 13) comportant un arbre sélecteur de rapports (10) monté à rotation pour pouvoir présenter au moins autant de positions de sélection qu'il y a de rapports de transmission possibles,ledit arbre sélecteur (10) étant à cet effet pourvu de moyens formant came (35, 36, 37) couplés auxdits engrenages de commutation (26, 27, 28) par l'intermédiaire de moyens formant contre-came (42, 43, 44);
- ladite boîte de vitesses étant caractérisée en ce qu' elle comporte également
- des moyens de découplage (11, 12, 13; 56, 57, 58) pour pouvoir rompre sélectivement le couplage entre chaque moyen formant came (35, 36, 37) et chaque moyen formant contre-came (42, 43, 44) qui lui est associé, afin de permettre la libre rotation dudit arbre sélecteur (10) vers une position de sélection de rapport quelconque, quel que soit le rapport de transmission précédemment sélectionné.

2. Boîte de vitesses suivant la revendication 1, caractérisée en ce qu'elle comprend également des moyens moteurs (12, 13) pour assurer une commande automatique dudit arbre sélecteur (10) et desdits moyens de découplage (11, 12, 13; 56, 57, 58)

3. Boîte de vitesses suivant l'une quelconque des revendications 1 et 2, caractérisée en ce que lesdits moyens de découplage comportent un arbre de découplage (11) monté rotatif parallèlement audit arbre sélecteur (10), cet arbre de découplage étant équipé d'au moins une came (56, 57, 58) par moyen formant contre-came (42, 43, 44) que compte ledit arbre sélecteur (10), chacune desdites cames de découplage (56, 57, 58) étant montée de manière à pouvoir dégager ledit moyen formant contre-came (42, 43, 44) de son moyen formant came (35, 36, 37) associé.

4. Boîte de vitesses selon la revendication 3, caractérisée en ce que ledit arbre de découplage (11) est pourvu de moyens de commande de passage en marche arrière (88, 89), la boîte (1) comprenant en outre un engrenage de marche arrière (MA, 94) associé auxdits arbres primaire (8) et secondaire (9) et un engrenage de commutation de marche arrière (93) monté de manière à pouvoir être commandé par lesdits moyens de commande de passage en marche arrière (88, 89).

5. Boîte de vitesses suivant l'une quelconque des revendications précédentes, caractérisée en ce que lesdits moyens formant came sont des rainures annulaires (35, 36, 37) de profil prédéterminé ménagées dans la surface périphérique dudit arbre sélecteur (10).

6. Boîte de vitesses suivant la revendication 5, caractérisée en ce que chacun des engrenages de commutation (26, 27, 28) est destiné à l'engagement de deux rapports de transmission, en ce qu'à cet effet il est monté mobile axialement dans les deux sens, respectivement sur lesdits arbres primaire (8) et secondaire (9), et en ce que chaque rainure formant came (35, 36, 37) dudit arbre sélecteur (10) comprend deux portions de déviation (35b, 36b, 37b) s'étendant dans des sens axiaux opposés, déviations qui permettent à l'engrenage correspondant d'être placé dans chacune de ses positions d'engagement de rapport.

7. Boîte de vitesses suivant la revendication 6, caractérisée en ce qu'elle comporte six rapports de transmission et en ce que toutes les portions de déviation sont décalées les unes des autres de 60° angulaires.

8. Boîte de vitesses suivant l'une quelconque des revendications 4 à 7, lorsqu'elles dépendant des revendications 1 à 3 prises ensemble, caractérisée en ce que lesdits moyens moteurs comprennent un moteur d'entraînement unique (13) à l'arbre de sortie duquel sont connectés deux dispositifs d'accouplement (60, 63, 69; 60a, 63a, 69a) à commande électromagnétique permettant de coupler sélectivement l'arbre sélecteur (10) et l'arbre de découplage (11) à l'arbre de sortie dudit moteur unique (13) pour pouvoir les placer dans des positions angulaires prédéterminées.

9. Boîte de vitesses suivant l'une quelconque des revendications 3 à 8, caractérisée en ce que ledit arbre de découplage (11) comporte, pour chacune desdites contre-cames (42, 43, 44), au moins une came (56, 57, 58) de forme ovoïde. orientée angulairement dans la même position et définissant par leur pointe une première position (0°) dans laquelle ces cames maintiennent lesdites contre-cames (42, 43, 44) dans leur position d'engagement avec ledit arbre sélecteur (10), lesdites cames de forme ovoïde définissant par leur profil deux autres positions angulaires (120° et 260°) dudit arbre de découplage, l'une dans laquelle lesdites contre-cames sont retirées de leur position d'engagement avec l'arbre sélecteur (10) et l'autre dans laquelle la marche arrière est engagée.

10. Groupe moteur destiné plus particulièrement à équiper un véhicule automobile et comportant, en combinaison un moteur d'entraînement (3), une boîte de vitesses selon l'une quelconque des revendications précédentes, ladite boîte (1) étant couplée à ce moteur d'entraînement (3, le groupe comprenant en outre un dispositif de démarrage (13, 87 à 102), équipé d'un moteur de lancement (13), ce groupe moteur étant caractérisé en ce que ledit moteur de lancement (13) est couplé de manière à pouvoir sélectivement lancer ledit moteur d'entraînement (3) et servir d'organe d'entraînement pour ledit arbre sélecteur (10) et pour lesdits moyens de découplage (11, 12; 56, 57, 58).

11. Groupe suivant la revendication 10, caractérisé en ce qu'un convertisseur de couple (6) est interposé entre ladite boîte (1) et ledit moteur d'entraînement (3).

## Patentansprüche

1. Getriebe, umfassend:
- eine Primärwelle (8) zur Kupplung an eine Leistungsquelle (3, 6);
- eine Sekundärwelle (9) zur Kupplung an einen Leistungsausgang (4, 5);
- eine Mehrzahl von auf den Primär- und Sekundärwellen (8, 9) montierten Zahnradsätzen, wobei die Zahnradsätze selektiv in Eingriff bringbar sind zur Einrichtung einer Mehrzahl von Übersetzungsverhältnissen zwischen der Quelle (3, 6) und dem Ausgang (4, 5);
- wobei die Zahnradsätze eine Mehrzahl von Zahnrädern zum Umschalten (26, 27, 28) der Übersetzungsverhältnisse aufweisen, wobei diese Zahnräder axialbeweglich auf den Wellen (8, 9) montiert sind, um das Einstellen der Übersetzungsverhältnisse zu ermöglichen;
- mit den Umschaltzahnrädern (26, 27, 28) gekuppelte Auswahlmittel (10 bis 13; 29, 30, 31; 35, 36, 37; 42, 43, 44), um deren entsprechende Axialbewegungen in Abhängigkeit des gewünschten Übersetzungsverhältnisses zu bewirken;
- wobei die Auswahlmittel (10, 12, 13) eine Welle (10) zur Auswahl der Übersetzungsverhältnisse umfassen, die drehbeweglich montiert ist, um wenigstens genau so viele Auswahlpositionen aufzuweisen wie es mögliche Übersetzungsverhältnisse gibt, wobei die Auswahlwelle (10) zu diesem Zweck mit Mitteln zur Bildung von Nockenbahnen (35, 36, 37) versehen ist, die mit den Umschaltzahnrädern (26, 27, 28) über Mittel, die Gegennocken (42, 43, 44) bilden, gekuppelt sind;
- wobei das Getriebe dadurch gekennzeichnet ist, daß es außerdem umfaßt
- Entkupplungsmittel (11, 12, 13; 56, 57, 58), um selektiv die zwischen jedem eine Nockenbahn bildenden Mittel (35, 36, 37) und diesem zugeordneten Gegennocken bildenden Mittel (42, 43, 44) bestehende Kupplung lösen zu können, um eine freie Drehung der Auswahlwelle (10) in eine beliebige Position zur Auswahl eines beliebigen Übersetzungsverhältnisses unabhängig von dem zuvor ausgewählten Übersetzungsverhältnis zu erlauben.

2. Getriebe nach Anspruch 1, dadurch gekennzeichnet, daß es außerdem Antriebsmittel (12, 13) zur Sicherstellung einer automatischen Steuerung der Auswahlwelle (10) und der Entkupplungsmittel (11, 12, 13; 56, 57, 58) umfaßt.

3. Getriebe nach einem beliebigen der Ansprüche 1 oder 2, dadurch gekennzeichnet, daß die Entkupplungsmittel eine drehbar parallel zur Auswahlwelle (10) montierte Entkupplungswelle (11) umfassen, wobei diese Entkupplungswelle mit wenigstens einem Nocken (56, 57, 58) ausgerüstet ist je von der Auswahlwelle (10) aufgewiesenem Mittel, das einen Gegennocken (42, 43, 44) bildet, wobei jeder der Entkupplungsnocken (56, 57, 58) derart montiert ist, daß er das Gegennocken (42, 43, 44) bildende Mittel von seinem zugehörigen eine Nockenbahn (35, 36, 37) bildenden Mittel freigeben kann.

4. Getriebe nach Anspruch 3, dadurch gekennzeichnet, daß die Entkupplungswelle (11) mit Mitteln zur Steuerung des Übergangs in einen Rückwärtsgang (88, 89) versehen ist, wobei das Getriebe (1) ferner ein Rückwärtsgangzahnrad (MA, 94), das den Primär- und Sekundärwellen (8, 9) zugeordnet ist, und ein Zahnrad (93) zum Schalten des Rückwärtsgangs umfaßt, welches derart montiert ist, daß es von den Mitteln zur Steuerung des Übergangs in einen Rückwärtsgang (88, 89) steuerbar ist.

5. Getriebe nach einem beliebigen der vorhergehenden Ansprüche, dadurch gekennzeichnet, daß die Mittel, die Nockenbahnen bilden, ringförmige Nuten (35, 36, 37) eines vorbestimmten Profils sind, die in der peripheren Oberfläche der Auswahlwelle (10) eingearbeitet sind.

6. Getriebe nach Anspruch 5, dadurch gekennzeicnnet, daß jedes der Umschaltzahnräder (26, 27, 28) dazu bestimmt ist, zwei Übersetzungsverhältnisse in Eingriff zu bringen, daß es zu diesem Zweck axialbeweglich in beide Richtungen, jeweils auf der Primärwelle (8) und der Sekundärwelle (9) montiert ist, und daß jede eine Nockenbahn (35, 36, 37) bildende Nut der Auswahlwelle (10) zwei Umleitabschnitte (35b, 36b, 37b), die sich in entgegengesetzte Axialrichtungen erstrecken, umfaßt, wobei die Umleitungen dem zugehörigen Zahnrad erlauben, in jeder seiner Eingriffspositionen des Übersetzungsverhältnisses positioniert zu werden.

7. Getriebe nach Anspruch 6, dadurch gekennzeichnet, daß es sechs Übersetzungsverhältnisse umfaßt und daß alle Umleitabschnitte gegenüber den anderen um 60° winkelversetzt sind.

8. Getriebe nach einem beliebigen der Ansprüche 4 bis 7, soweit auf Ansprüche 1 bis 3 zugleich rückbezogen, dadurch gekennzeichnet, daß die Antriebsmittel einen einzigen Antriebsmotor (13) umfassen, an dessen Ausgangswelle zwei Kupplungsvorrichtungen (60, 63, 69; 60a, 63a, 69a) mit elektromagnetischer Steuerung angeschlossen sind, die eine selektive Kupplung der Auswahlwelle (10) und der Entkupplungswelle (11) mit der Ausgangswelle des einzigen Motors (13) erlauben, um sie in vorbestimmte Winkelpositionen positionieren zu können.

9. Getriebe nach einem beliebigen der Ansprüche 3 bis 8, dadurch gekennzeichnet, daß die Entkupplungswelle (11) für jede der Gegennocken (42, 43, 44) wenigstens einen eiförmigen jeweils in dieselbe Winkelposition orientierten Nocken (56, 57, 58) umfaßt, der mit seiner Spitze eine erste Position (0°) definiert, in der diese Nocken die Gegennocken (42, 43, 44) in ihrer Eingriffsposition mit der Auswahlwelle (10) halten, wobei die eiförmigen Nocken durch ihr Profil zwei andere Winkelpositionen (120° und 260°) der Entkupplungswelle definieren, die eine, in der die Gegennocken aus ihrer Eingriffsposition mit der Auswahlwelle (10) zurückgezogen sind, und die andere, in der der Rückwärtsgang eingelegt ist.

10. Motorbaugruppe, insbesondere zur Ausrüstung eines Kraftfahrzeugs bestimmt, umfassend in Kombination einen Antriebsmotor (3), ein Getriebe nach einem beliebigen der vorhergehenden Ansprüche, wobei das Getriebe (1) mit dem Antriebsmotor (3) gekuppelt ist, wobei die Baugruppe ferner eine Anlaßvorrichtung (13, 87 bis 102) umfaßt, die mit einem Startermotor (13) ausgerüstet ist, wobei die Motorbaugruppe dadurch gekennzeichnet ist, daß der Startermotor (13) derart gekuppelt ist, daß er selektiv den Antriebsmotor (3) anwerfen und als Antriebsorgan für die Auswahlwelle (10) und für die Entkupplungsmittel (11, 12; 56, 57, 58) dienen kann.

11. Baugruppe nach Anspruch 10, dadurch gekennzeichnet, daß ein Drehmomentwandler (6) zwischen dem Getriebe (1) und dem Antriebsmotor (3) eingefügt ist.

## Claims

1. Gearbox comprising :
- a primary shaft (8) intended to be coupled to a power supply (3, 6);
- a secondary shaft (9) intended to be coupled to a power outlet (4, 5);
- a plurality of sets of gearwheels mounted on said primary (8) and secondary (9) shafts, said sets of gearwheels being able to be selectively meshed to establish a plurality of transmission ratios between said supply (3, 6) and said outlet (4, 5);
- said sets of gearwheels comprising a plurality of switching gearwheels (26, 27, 28) for said ratios, these gearwheels being mounted so as to move axially on said shafts (8, 9) to enable said ratios to be established;
- selection means (10 to 13; 29, 30, 31; 35. 36, 37; 42, 43, 44) coupled to said switching gearwheels (26, 27, 28) to cause them to make the appropriate axial movements according to the desired transmission ratio;
- said selection means (10, 12, 13) comprising a ratio selector shaft (10) rotationally mounted so as to be able to have at least as many selection positions as there are possible transmission ratios, said selector shaft (10) being therefore provided with cam forming means (35, 36, 37) coupled to said switching gearwheels (26, 27, 28) through the intermediary of counter-cam forming means (42, 43, 44);
- said gearbox being characterized in that it also comprises
- decoupling means (11, 12, 13; 56, 57, 58) for selectively disabling the coupling between each cam forming means (35, 36, 37) and each counter-cam forming means (42, 43, 44) associated with it, in order to enable the free rotation of said selector shaft (10) towards any ratio selection position, whatever the previously selected transmission ratio.

2. Gearbox according to claim 1 characterized in that it also comprises motor means (12, 13) to ensure automatic control of said selector shaft (10) and said decoupling means (11, 12, 13; 56, 57, 58).

3. Gearbox according to any one of claims 1 and 2, characterized in that said decoupling means comprise a decoupling shaft (11) rotationally mounted parallel to said selector shaft (10), such decoupling shaft being equipped with at least one cam (56, 57, 58) per counter-cam forming means (42, 43, 44) which said selector shaft (10) has, each of said decoupling cams (56, 57, 58) being mounted in such a way that they are able to disengage said counter-cam forming means (42, 43, 44) from its associated cam forming means (35, 36, 37).

4. Gearbox according to claim 3, characterized in that said decoupling shaft (11) is provided with means for controlling the shift into reverse (88, 89), the gearbox (1) also comprising reverse gearwheels (MA, 94) used with said primary (8) and secondary (9) shafts and reverse switching gearwheels (93) mounted so as to be able to be controlled by said reverse shift control means (88, 89).

5. Gearbox according to any one of the preceding claims, characterized in that said cam forming means are annular grooves (35, 36, 37) of predetermined profile arranged in the peripheral surface of said selector shaft (10).

6. Gearbox acording to claim 5, characterized in that each of the switching gearwheels (26, 27, 28) is intended to engage two transmission ratios, in that it is therefore mounted so as to move axially in both directions, respectively on the primary (8) and secondary (9) shafts, and in that each cam groove (35, 36, 37) of said selector shaft (10) comprises two deviation portions (35b, 36b, 37b) extending in opposite axial directions, such deviations enabling the corresponding gearwheels to be placed in each of its ratio engaging positions.

7. Gearbox according to claim 6, characterized in that it comprises six transmission ratios and in that all the deviation portions are staggered in relation to each other at an angle of 60°.

8. Gearbox according to any one of claims 4 to 7, when they depend upon claims 1 to 3 taken together, characterized in that said motor means comprise a single driving motor (13) at the shaft outlet of which are connected two electromagnetically controlled coupling mechanisms (60, 63, 69; 60a, 63a, 69a) enabling the selective coupling of the selector shaft (10) and the decoupling shaft (11) to the outlet shaft of said single motor (13) to enable them to be placed in predetermined angular positions.

9. Gearbox according to any one of claims 3 to 8, characterized in that said decoupling shaft (11) comprises, for each of said counter-cams (42, 43, 44), at least one cam (56, 57, 58) of ovoid form, angularly oriented in the same position and defining by its point a first position (0°) in which these cams maintain said counter-cams (42, 43, 44) in their engaged position with the selector shaft (10), said ovoid-shaped cams defining by their profile two other angular positions (120° and 260°) of said decoupling shaft, in one of which said counter-cams are withdrawn from their engaged position with the selector shaft (10) and the other in which reverse gear is engaged.

10. Power unit intended more particularly to equip a motor vehicle and comprising, in combination, a driving motor (3), a gearbox according to any one of the preceding claims, said gearbox (1) being coupled to said driving motor (3), the unit also comprising a starter mechanism (13, 87 to 102), equipped with a starter motor (13), this power unit being characterized in that said starter motor (13) is coupled so as to be able to start selectively said driving motor (3) and to be used as driving organ for said selector shaft (10) and for said decoupling means (11, 12; 56, 57, 58).

11. Unit according to claim 10, characterized in that a torque converter (6) is interposed between said gearbox (1) and said driving motor (3).
